# EUROPEAN PATENT APPLICATION

(11) **EP 2 141 880 A1**
(43) Date of publication of application: **06.01.2010**
(21) Application number: 08159635.5
(22) Date of filing: 03.07.2008
(51) Int. Cl.: H04L 29/06

(54) **Downloading of media products to a terminal in a communication network**

(71) Applicant: Music2Me Aktiebolag, 431 53 Mölndal (SE)
(72) Inventor: Sandholt, Hans, 442 60 Kungälv (SE)
(74) Representative: Edlund, Fabian

(57) **Abstract**

A method of providing a media product (71) to a terminal (2) comprising acquiring a streaming host identity (62) specific for the streaming host (6) currently streaming media content (61) to the terminal; acquiring a content identity (611) of the media content; associating the content identity with a predefined product identity (711) of a media product; transmitting media information (31) indicative of the media product; receiving a download request (222) for the media product; and allowing transmission of the media product.

A corresponding method is performed in the terminal.

Additionally, a service-provider (3) and terminal adapted to perform these methods, respectively, are provided and a download system (1) comprising such a service-provider and terminal.

Furthermore, computer program products are provided, comprising software instructions that, when executed in such a service-provider and terminal, performs the steps of the mentioned methods.

Without being restricted by conventional radio broadcasting of media content, the present invention supports provision and downloading of corresponding media products to a terminal in an efficient and convenient manner.

## Description

### Technical Field of the Invention

The present invention relates to a first and a second method of providing and downloading, respectively, a media product to a terminal in a communication network further comprising a streaming host for streaming media content to the terminal, which second method is performed in the terminal.

The present invention also relates to a service-provider and terminal adapted to perform the first and second methods, respectively, and a download system comprising such a service-provider and terminal.

The present invention furthermore relates to computer program products comprising software instructions that, when executed in such a service-provider and terminal, respectively, performs the steps of the first and second methods.

### Background Art

Downloading of various media products from a remote system is nowadays an ordinary and well-known occurrence performed by ordinary people. For example, it is well known to download music from a server on the Internet to a home computer or to a mobile terminal. Most commonly however, downloading involves a substantial amount of browsing to find a suitable supplier, along with a more or less complicated purchase and identification procedure. Additionally, the user may have difficulties identifying the desired media product, in that he or she may have forgotten the name of the artist and/or the name of the song sought after to be downloaded.

Naturally, there has been a strive for simplifying the process of downloading media products from a remote system. WO 2007/046739, for instance, provides an improved solution that enables a user to purchase and download a desired media product connected to the media content currently heard or viewed by the user. The described solution is based on a broadcasting station transmitting a signal comprising media content, such as a song, along with transmission of a media product identifier connected to the currently broadcasted media content. For example, conventional FM radio broadcast may be used, which in addition to media content transmits a Radio Data System signal (RDS signal) or a Radio Broadcast Data System signal (RBDS signal) comprising small amounts of digital information enabling identification of the currently heard or viewed media content.

Although enabling for a user-friendly and convenient manner of purchasing and downloading a media product connected to a currently broadcasted e.g. song tuned in by a mobile terminal, the restriction to conventional radio broadcasting of media content for the solution above, however, limits the range of use.

### General disclosure of the Invention

It is therefore an object of the present invention to at least provide a solution which, without being restricted by conventional radio broadcasting of media content, supports provision and downloading of a media product corresponding to that media content to a terminal in an efficient and convenient manner.

According to the invention, this and other objects are achieved by a method of providing a media product to a terminal in a communication network further comprising a streaming host for streaming media content to the terminal, which method comprises the steps of:
receiving, from the terminal, unique customer data comprising information specific for the terminal, a user of the terminal, and/or an additional mobile terminal associated with the user;
identifying the terminal, user, and/or additional mobile terminal associated with the user based on the unique customer data;
acquiring, from the terminal, a streaming host identity specific for the streaming host currently streaming media content to the terminal;
acquiring, from the streaming host, based on the streaming host identity, a content identity of the media content currently streamed to the terminal from the streaming host;
associating the content identity with a predefined product identity of a media product;
transmitting, to the terminal, following the associating step, media information indicative of the media product of the product identity;
receiving, from the terminal, a download request for the media product based on the media information; and
allowing transmission of the media product from a content host holding the media product to the terminal and/or additional terminal(s) designated by the user.

The invention likewise concerns a service-provider supporting such provision of a media product to a terminal, and a computer program product comprising software instructions that, when executed in such a service-provider, performs provision of a media product to a terminal according to above.

Correspondingly there is provided a method of downloading a media product to a terminal in a communication network further comprising a streaming host for streaming media content to the terminal, which method is performed in the terminal and which comprises the steps of:
transmitting, to a media content download service-provider, a streaming host identity specific for the streaming host currently streaming media content that is available to the terminal;
transmitting, to the service-provider, unique customer data comprising information specific for the terminal, a user of the terminal, and/or an additional mobile terminal associated with the user;
receiving, from the service-provider, media information indicative of a predefined media product of a product identity associated with a content identity of the streamed media content;
transmitting a download request for the media product to the service-provider, as a response to a command based on the media information; and
acquiring the media product from a content host holding the media product to the terminal, and/or additional terminal(s) designated by the user.

The invention likewise concerns a terminal supporting such downloading of a media product to a terminal, and a computer program product comprising software instructions that, when executed in such terminal, performs such downloading of a media product to a terminal.

Additionally, the present invention likewise concerns a download system for downloading a media product to a terminal in a communication network further comprising a streaming host for streaming media content to the terminal, which download system comprises such a service-provider and terminal.

Consequently, by introducing a solution for downloading of a media product corresponding to a media content currently being received by a terminal, which solution is based on the media content being streamed to the terminal through a communication network from a streaming host, the present invention thus overcomes the drawback of being restricted to conventional media content broadcasting, such as FM broadcasting. The solution of the present invention is thus applicable also for terminals lacking support for reception of media content broadcasted in a conventional manner, since the ability to "tune in" to a e.g. radio station instead is enabled through reception of streamed media content from a supplier of a streaming service via a network. Streaming of data is well known to those skilled in the art, and the technique enables virtually any type of media content to be received by terminals such as mobile terminals or computers connected to the network through which the streamed data is provided. The network may for instance be a wireless telecommunication network, preferably wideband, connected to the Internet.

With the rapidly increasing market for streaming data, not least due to expansion of the third generation of mobile communication providing increased wideband functionalities, there is a growing demand for ways not limited by conventional broadcasting techniques for a user to, based on a media content currently being streamed to the user, e.g. purchase, lend, rent, give or share and download the corresponding media product. Utilizing the present invention, this demand is met.

Other aspects, benefits and advantageous features of the invention will be apparent from the following description and claims.

### Brief Description of the Drawings

These and other aspects of the present invention will now be described in more detail, with reference to the appended drawings showing currently preferred embodiments of the invention, wherein:
Figure 1 schematically illustrates an exemplifying media product download system in accordance with a first embodiment of the present invention.
Figure 2 is a schematic graph illustrating exemplifying steps taken by the embodiment of the media product download system shown in Figure 1.
Figure 3 is a schematic graph illustrating exemplifying steps for deriving a unique customer identity.
Figure 4 is a schematic graph illustrating exemplifying steps for comparison of a content identity with predefined product identities of media products.
Figure 5 schematically illustrates an exemplifying media product download system in accordance with a second embodiment of the present invention.

### Detailed Description of the Preferred Embodiments of the Invention

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

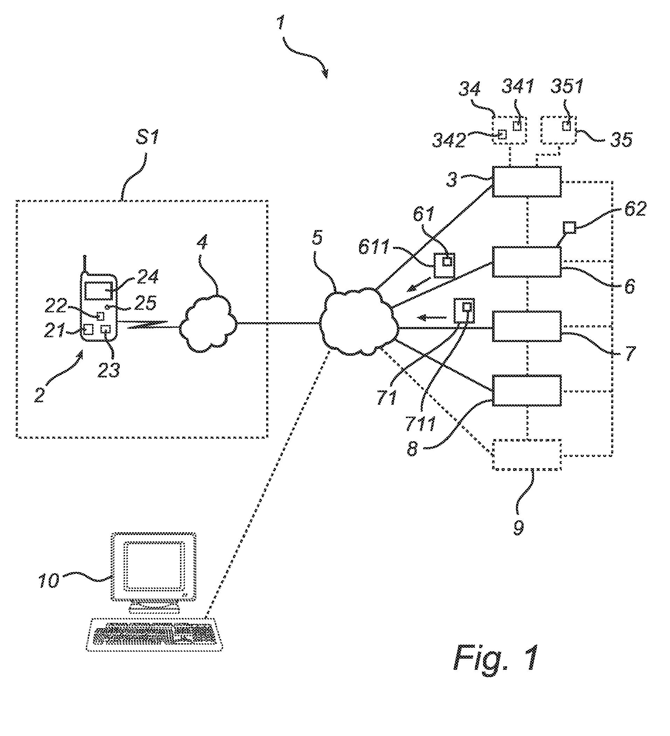

Figure 1 schematically illustrates an exemplifying media product download system 1 in accordance with a first embodiment of the present invention. In the system 1, a mobile terminal 2 and a service-provider 3 are provided along with other parts essential for realization of downloading of media products 71 to the mobile terminal 2. Note that although in the exemplifying shown embodiment a mobile terminal such as a mobile phone is depicted, the invention is not restricted thereto; an arbitrary terminal 2 may likewise be utilized, as will be described further below. For sake of identification, the mobile terminal 2 comprises a unique identity 21 in that it is provided with a number unique to the terminal 2, such as for instance an IMEI (International Mobile Equipment Identity); alternatively and/or additionally does the user of the mobile terminal 2, i.e. the subscriber, have a unique identity 21 which is in use for instance by insertion of a personal smart card such as an USIM (Universal Subscriber Identity Module) storing a unique user identification called the IMSI (International Mobile Subscriber Identity), or a SIM (Subscriber Identity Module). The unique user identification is preferably connected to a subscription or similar offered by an operator 8 of the telecommunication network 4.

Mobile terminal 2 is furthermore adapted to support downloading of media products 71, and is consequently provided with support for media product downloading 22. This support 22 may be implemented by means of a hardware circuitry, such as for instance one or several ASICs or other suitable circuits. However, implementation may likewise alternatively or additionally be accomplished by means of software, e.g. in the form of a JAVA application or some other suitable program application. The support for media product downloading 22 may be installed during manufacturing or downloaded later by for instance the user or network operator 8. In case of software means, the support 22 may be provided on a data carrier such as a CD ROM or an insertable memory stick, which will perform embodiments of the present invention when loaded into the mobile terminal 2. Likewise, the software 22 may be downloaded remotely from a server or be downloaded via a computer like a PC to which the mobile terminal 2 is temporarily connected. The support 22 may be native, i.e. adapted to the specific mobile terminal 2 for which it is intended, in which case the support 22 suitably is a hardware circuitry. The support 22 may however likewise be more or less generic, for instance adapted so as to be executed under an operative system that is used by a plurality of mobile terminals 2 provided from different manufacturers. The support 22 may access, initiate and use the data communication capability of the mobile terminal 2, and is preferably operatively connected to a data memory 23 arranged in the mobile terminal 2. The data memory 23 may for instance be an internal memory or an exchangeable memory unit, such as for instance a memory stick. Furthermore, the support 22 is preferably adapted to activate at least one of the button keys 25 or similar on the mobile terminal 3 so as to be able to receive commands from the user. Interaction with the user is further preferably supported by a display 24 present on the mobile terminal 2.

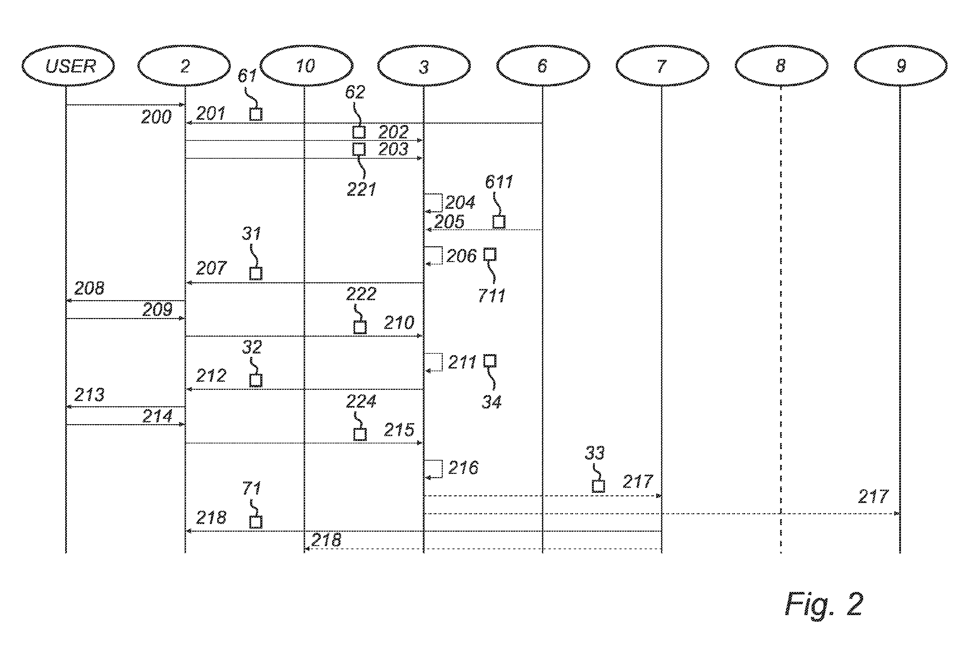

The functionality, which the mobile terminal 2 with utilization of the support for media product downloading 22 is adapted to provide, will be described in detail with reference to Figure 2 further on.

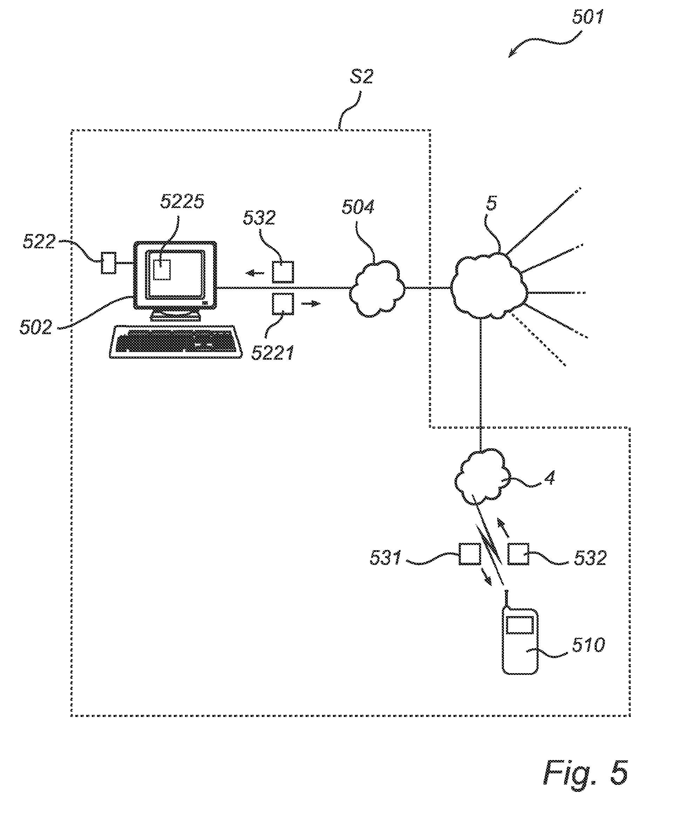

As depicted in Figure 1, the mobile terminal 2 is connected to a wireless telecommunication network 4. Note that the dashed line surrounding the terminal 2 and network 4 merely indicates a section S1 of Figure 1, which in Figure 5 will be replaced by section S2 to illustrate a second embodiment of the present invention.

The network 4 is preferably, although not necessarily, a broadband network enabled by for instance UMTS (Universal Mobile Telecommunication System) in 3G (third generation mobile cell phone technology), or GPRS (General Packet Radio Service) or EDGE (Enhances Data Rates for GSM Evolution) in 2,5G or 2,75G. However, since the terminal 2 not necessarily need to be mobile, the telecommunication network 4 is subsequently not necessarily restricted to being wireless.

The network 4 enables the mobile terminal 2 to have access to the Internet 5. With access to the Internet 5, the ability to receive media content 61 streamed by a streaming host 6 arises. Streaming of data is well known to those skilled in the art, and the technique enables vast types of media content 61 to be received by a plurality of devices, e.g. the shown mobile terminal 2, over the Internet 5 and network 4. Since there are mobile phone suppliers choosing to design terminals 2 without support for reception of media content broadcasted in a conventional manner, for instance by conventional FM radio broadcast, the ability to e.g. tune in to a radio station is, in embodiments of the present invention, enabled through reception of streamed media content from a streaming host 6 through the network 4. The streaming host 6 may be a broadcasting radio station which preferably utilizes a streaming service for streaming the content of the broadcast, i.e. the media content 61, from the e.g. radio station such that the media content 61 is receivable by terminals 2 connected to the Internet 5. The e.g. broadcasting radio station is by the service-provider 3 associated with a unique streaming host identity 62. The media content 61 being streamed from the streaming host 6 is furthermore identified by a content identity 611, which is unique for the media content 61.

The media product download system 1 of Figure 1 additionally comprises a content host 7 holding media products 71 downloadable to the mobile terminal 2. The content host 7 is for instance represented by one, or several different, data storage servers connected to the Internet 5. Media products 71 may be a vast variety of items such as music, pictures, newspapers, talking books, television programs and videos broadcasted and subsequently streamed by the streaming host 6. Media products may furthermore by electronic tokens, identifiers, PIN-codes etc. to be used for collecting a ticket or similar requested and purchased as a response to a commercial offer from the streaming host 6. The media product 71 is preferably identified by a unique product identity 711 defined by the content host 7 from which the media product 71 may be acquired.

The content host 7 is preferably provided with appropriate software for enabling communication with service-provider 3 so as to enable searching for a media product 71. Alternatively and/or additionally, if the content host 6 is a data storage such as a local hard disc more or less directly connected to the service-provider 3, such a search may be performed by means of software comprised in the service-provider 3 itself.

The media product downloading system 1 furthermore optionally comprises a billing host 9, which may be utilized should that be the choice of the content host 7 and/or network operator 8 for handling of payment.

Additionally, the media product downloading system 1 may comprise an optional terminal 10, in the shown embodiment a computer, connected to the Internet 5. The optional terminal 10 may likewise be a mobile terminal or an arbitrary device connectable to the Internet 5.

Returning now to the service-provider 3; in order to provide the functionality which will be described in detail in the following, the service-provider 3 may contain several subsystems and the functionality may be distributed over several different units. The service-provider 3 preferably comprises software as well as hardware. The service-provider 3 may comprise one mother server 34 and if preferred a plurality of additional servers that can be accessed via the Internet 5, for instance by means of TCP/UDP and HTTP protocols known in the art. The architecture of the service-provider 3 is preferably based on additional usage of one or several existing web-hotels 35, where simple web software may be installed and self-configured.

According to this first embodiment, the service-provider 3 comprises, among other things, a price model 342, for instance provided on the mother server 34, and additionally identities tables 341, 351, which will be described further on.

In order to communicate with the mobile terminal 2, the service-provider 3 may for instance be provided with a CGI (Common Gateway Interface). Communication with the content host 7, on the other hand, depends on the nature of the content host 7. That is, in case of the content host 7 being a local storage such as a hard disk connected to the service-provider 3, a connection utilized by USB or an Ethernet connection may be appropriate. In case of the content host 7 being represented by a plurality of data storage servers on the other hand, the Internet 5 and any suitable connection and protocol associated therewith may be a better-suited choice.

The functionality, which the service-provider is adapted to provide, will be described in detail with reference to Figure 2 hereinafter.

Figure 2 is a schematic graph illustrating exemplifying steps taken by the embodiment of the media product download system shown in Figure 1. The steps provided in the illustration are not restricted to be performed in the order presented, but may naturally be performed in any order feasible and preferred. Regarding the layout in Figure 2, the user, mobile terminal 2, optional additional terminal 10, service-provider 3, streaming host 6, content host 7, network operator 8, and billing host 9 are represented by vertical lines. Arrows extend horizontally between the vertical lines so as to represent actions taken in accordance with the exemplifying steps.

In a first step 200, the user of the mobile terminal 2 commands the mobile terminal 2 to attempt to receive streamed media content 61 from a specific streaming host 6, such as a radio station streaming media content 61 through a streaming service. Streamed media content 61 is thereby, in step 201, streamed to the mobile terminal 2 continuously until for any reason the stream is interrupted. Alternatively, streamed media content 61 may be received by the mobile terminal 2 first after identification, which step of identification is explained in the following (step 204).

In step 202, the mobile terminal 2 transmits, to the service-provider 3, the streaming host identity 62 specific for the streaming host 6 currently streaming media content 61 that is available to the mobile terminal 2. The logical block of the service-provider 3 handling this request is preferably implemented at the web-hotel 35, which block preferably is proactively updated from the mother server 34.

Additionally, in step 203, the mobile terminal 2 transmits, to the service-provider 3, the unique customer data 221 comprising information specific for the mobile terminal 2, the user of the mobile terminal 2, and/or an additional mobile terminal associated with the user. The latter of the three may be applicable should the terminal 2 be a computer 10 lacking information specific for the computer 10, which will be described with reference to Figure 5. Note that the steps 202, 203 involving transmitting the streaming host identity 62 and the unique customer data 221 may be one single step, in that the information may be transmitted in one and the same message to the service-provider 3.

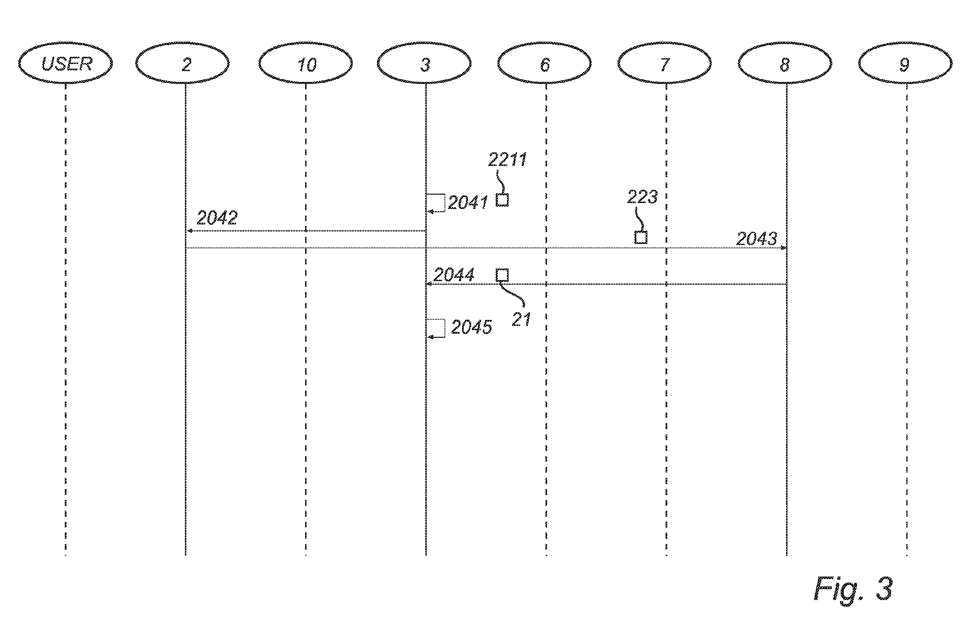

In step 204, the service-provider 3 identifies the mobile terminal 2 and/or user based on the provided customer data 221. For instance, the unique identity 21 may be retrieved from a cookie in the transmitted message. Should the service-provider 3 not be able to recognize the mobile terminal 2 and/or user in an initial stage of this identification procedure, actions to derive a unique customer identity 2211 recognizable to the service-provider 3 preferably need to take place, which will be further described with reference to Figure 3 hereinafter, where sub steps 2041 to 2045 replaces step 204 for identification.

Based on the customer data 221, XML (Extensible Markup Language) files may be built from which the customer identity 2211 and the network operator 8 to which the customer identity 2211 is connected may be derived. The XML files preferably describes a set of URLs (uniform resource locator) for quotation and purchase, previous downloads 218 associated with the customer data 221, available streaming hosts 6 and the structure how these are presented to the user. The XML file is preferably basically a static file with few exceptions for operator 8 and data associated with the customer data 221.

In Figure 3, in step 2041, the service-provider 3 thus checks if the customer data 221 comprises the unique customer identity 2211 identifying the mobile terminal 2, user of the mobile terminal 2, and/or additional mobile terminal associated with the user, which customer identity 2211 is recognizable to the service-provider 3. If the customer data 221 is verified to comprise the unique customer identity 2211, the service-provider 3 may proceed to retrieve the content identity 611 as described in step 205 below. However, if the customer data 221 does not comprise the unique customer identity 2211, a SOAP (Simple Object Access Protocol) request well known in the art may be transmitted by the service-provider 3 to a lookup service for instance supplied by the network operator 8.

Yet another option may be to retrieve the unique customer identity 2211 at least through the following steps, in which e.g. URLs are transmitted between the mobile terminal 2, the service-provider 3, and an identity lookup service for instance supplied by the network operator 8. The service 8 holds listings of registered unique identities 21 for terminals 2, 10 and/or subscribers.

In step 2042, the service-provider 3 prompts the mobile terminal 2 to transmit identity lookup data 223 based on the customer data 221 to the identity lookup service 8. Thus, in step 2043, the mobile terminal 3 transmits the mentioned identity lookup data 223 to the identity lookup service 8.

Additionally, in step 2044, the service-provider 3 acquires, from the identity lookup service 8, the unique identity 21 identified based on the identity lookup data 223, in order to match the mobile terminal 2, user, and/or additional mobile terminal associated with the user.

In step 2045, the service-provider 3 derives the customer identity 2211 from the unique identity 21.

Turning back to Figure 2. In step 205, based on the streaming host identity 62, the service-provider 3 acquires, from the streaming host 6, the content identity 611 of the media content 61 currently being streamed to the mobile terminal 2 from the streaming host 6.

Before proceeding to step 206, it should be emphasized that content identities 611 of media contents 61 are preferably constantly linked with predefined product identities 711 of media products 71 representing those media contents 61, and stored in the first product identities lookup table 351. That is, each content identity 611 is linked to a corresponding product identity 711. This first table 351 is preferably, as previously mentioned, provided on the web-hotel 35 rather than on the mother server 34, for optimization of the service-provider 3. In the first table 351 may additionally, for each product identity 711 stored, a product identity text string 7111 of the product identity 711 be stored, which text string 7111 preferably is a decoded and compressed version of the product identity 711 text string. In the same manner may, for each content identity 611 stored in the first table 351, a content identity text string 6111 of the content identity 611 additionally be stored, which text string 6111 preferably is a decoded and compressed version of the content identity 611 text string. In order to accomplish compact and efficient text strings 6111, 7111, the following rules are preferably followed in creating the strings 6111, 7111:
- only lower case is used
- certain words such as "the" are ignored
- recording-specific information is ignored
- special characters are removed; i.e. only characters [a-z, 0-9] are used

Furthermore, predefined product identities 711 of media products 71 are preferably constantly entered and stored in the second product identities lookup table 341 on e.g. the mother server 34. Entering of these product identities 711 may for instance be accomplished using a web interface, or by download dumps from content hosts 8.

Consequently, the first and second tables 341, 351 are available for finding a media content 71 matching a media content 6, as will be described in step 206 hereinafter.

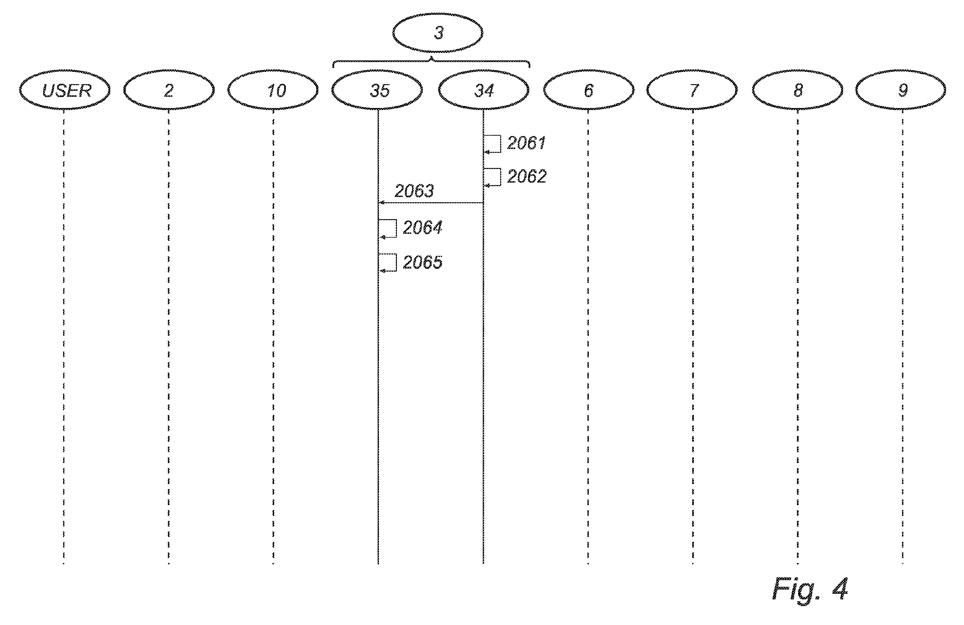

In step 206, the service-provider 3 associates the content identity 611 with a predefined product identity 711 of the media product 71. An approach for in an exemplifying manner identifying a media product 71 to associate the currently streamed media content 61 with is described with reference to Figure 4, where the step 206 of association is replaced by sub steps 2061 to 2065.

In Figure 4, in step 2061, the service-provider 3 searches for an equivalent content identity corresponding to the content identity 611 of the currently streamed media content 61 in the first product identities lookup table 351. If the equivalent content identity is found, the service-provider 3 matches, in step 2062, the content identity 611 with the predefined product identity 711 linked to the equivalent content identity and hence with the media product 71 of the product identity 711. If an equivalent content identity on the other hand is not found, a request for a search in the second table 341 is initiated in step 2063.

In step 2064, the service-provider 3 searches for a matching product identity corresponding to the content identity 611 in the second product identities lookup table 341. The search is based on comparison of the content identity text string 6111 with the product identity text strings 7111 of the respective product identities in the second table 341.

In step 2065, the service-provider 3 matches the content identity 611 with the matching product identity 711 and hence with the media product 71 of the product identity 711. Should no product identity 711 be found to match the content identity 611, an error message may be returned.

In step 207, the service-provider 3 transmits, to the mobile terminal 2, media information 31 indicative of the media product 71 of the product identity 711. The media information 31 may for instance comprise the name of the media content 61 e.g. song played, the artist, duration of the media content 61 etc., and whether or not a media product 71 representing the media content 61 is available for download from a content host 7.

In step 208, one or several options based on the media information 31 are preferably presented to the user. For instance may the user be given an option to initiate download actions with regards to the media product 71 associated with the currently streamed media content 61 received by the mobile terminal 2.

In step 209, the user may select this given option to initiate download, whereby in step 210 the mobile terminal 2 transmits a download request 222 for the media product 71 to the service-provider 3, as a response to the command from the user based on the media information 31.

Preferably, in step 211, the service-provider 3 acquires predefined terms 34 for the media product 71 based on the customer data 221, and transmits, in step 212, a download answer 32 based on the predefined terms 34 to the mobile terminal 2. The download answer 32 may for instance indicate a quotation for the media product 71 in which the user is interested. Preferably, a price model 342 providing the ability for differentiated prices for media products 71 is implemented, from which the predefined terms 34 may be derived. For instance, with the suggested price model 342, the network operators 8 are given the opportunity to offer users different quotations under different circumstances. The following parameters may be used to differentiate a price:
- the network operator 8 to which the mobile terminal 2, user, and/or additional mobile terminal associated with the user, is a subscriber,
- the streaming host 6,
- the history of previous downloads by the subscriber,
- the time when the download request 222 was placed by the mobile terminal 2

Consequently, following a download request 222 from the mobile terminal 2, which for instance my be a quotation request, the service-provider 3 searches through a set of rules in order to identity a first valid rule applicable for the network operator 8 to which the mobile terminal 2, user, and/or additional mobile terminal associated with the user, is a subscriber. The price may then for instance be based on the streaming host 6 providing the content media 61 to the mobile terminal 2, the time when the download request 222 was placed, and/or the number of media contents 71 downloaded by the subscriber. A discount may thus for instance be offered if the download request 222 was placed within a predefined time range, from a specified streaming host 6. The abilities offered by the above-suggested set of rules are vast, and any combinations are naturally covered by the scope of the present invention. The price model 342 is preferably, although not necessarily, provided on the mother server 34.

In step 213, according to this embodiment, one or several options based on the download answer 32 are presented to the user. For instance is the user presented with a quotation for the media product 71 and the further option of initiating retrieval of the media product 71.

In step 214, the user may then select the given further option, whereby in step 215, the mobile terminal 2 transmits an order request 224 to the service-provider 3 as a response to the further command from the user based on the download answer 32.

In step 216, the service-provider 3 allows transmission of the media product 71 from the content host 7 holding the media product 71 to the mobile terminal 2. The service-provider 3 may for instance handle the order request 224 by initially verifying validity of parameters of the order request 224, for instance a URL comprising information based on the customer data 221, operator 8, streaming host 6, media product 71, and information indicating the rule applicable for the price model 342. If there are errors, an error message is preferably returned.

According to the shown embodiment, the predefined terms 34 indicate that payment is required, why the service-provider 3 transmits, in step 217, a billing request 33 to the content host 7 providing the media product 71 to the mobile terminal 2, and/or the associated billing host 9.

In step 218, the mobile terminal 3 and/or an additional terminal(s) 10 designated by the user acquire, i.e. download, the media product 71 from the content host 7. It should be emphasized, that the user thus may choose to additionally or alternatively download 218 the media product 71 to the additional computer 10. If preferred, the content host 7 may provide the media product 71 to the service-provider 3, which then in turn provides the media product 71 to the mobile terminal 3 and/or the additional terminal(s) 10. The mobile terminal 3 preferably stores the media product 71 in the data memory 23. The mobile terminal 2 may additionally display a message on the display 24 informing about the completed download of the media product 71.

Thereby, in supporting the steps of Figure 2, the service-provider 3 and the mobile terminal 2, by utilizing the support for media product downloading 22, are adapted to without being restricted by conventional radio broadcasting of media content 61, support downloading of the media product 71 representing the media content 61 currently being streamed to the mobile terminal 2, in an efficient and convenient manner.

It should be emphasized that although in the provided embodiments a purchase of a media product 71 is described, the present invention is not restricted thereto. A media product 71 may likewise be subject to be lent and/or given and/or rented and/or shared from the content host 7 or between a plurality of terminals 2.

According to other embodiments, the support for media product downloading 22 may provide the mobile terminal 2 with additional functionality (now shown). Such functionality may for instance be provision of a download record list viewable on the display 24, enabling the user of the mobile terminal 2 to browse through what has previously been downloaded 218, which may for instance be available for download again. Another example is provision of a play list for a given streaming host 6 viewable on the display 24, which list may contain media contents 61 streamed e.g. earlier during the day.

As previously stated, other devices 2 than mobile terminals are likewise feasible within the scope of the present invention. In Figure 5, section S1 has been replaced by section S2, and thus according to a second embodiment, the mobile terminal 2 of Figure 1 has been replaced with a computer 502, comprising a support for media product downloading 522. The computer 502 is via a communication network 504 connected to the Internet 5, which enables the computer 502 to receive media content 61 from a streaming host 6. As the service-provider 3 may have difficulties identifying the computer 502, an additional mobile terminal 510 is preferably present within the media product download system 501, which additional mobile terminal 510 is connected to a telecommunication network 4.

The parts and functionality of the second embodiment in Figure 5 are essentially identical to those of the first embodiment illustrated in Figure 1. Consequently, only differences between the two embodiments are shown and described hereinafter.

In use, the user of the computer 502 receives streamed media content 61. Following a download request 222 from the computer 502, for instance comprising a quotation request for the desired media product 71 representing the media content 61 currently received by the computer 502, an additional step preferably needs to performed in order for the user to be identified by the service-provider 3 prior to a download 218. For instance, the support for media product downloading 522 may, following provision of a download answer 532, provide a pop-up window 5225 on the display of the computer 502, prompting the user to type in his or her number for the additional mobile terminal 510 to which he or she is associated. The number for the additional mobile terminal 510 is transmitted to the service-provider 3, whereby unique customer data 5221 is provided. The user of the computer 502 may consequently be identified as described in conjunction with the first embodiment. In order to affirm that the given number is one associated with the user, the service-provider 3 preferably transmits an SMS 531 to the given number. The SMS 531 may comprise information with regards to the desired media product 71, such as predefined terms 34, e.g. the quotation. The user confirms download 218 of the media product 71 to the terminal 502, the additional mobile terminal 510, and/or further additional terminals 10 designated by the user, by accepting the e.g. predefined terms 34, whereby a returning confirmative SMS 532 is transmitted to the service-provider 3.

The present inventive concept has been described above by way of example, and the person skilled in the art realizes that the present invention by no means is limited to the preferred embodiments described above.

It should furthermore be obvious that the devices, elements etc. illustrated in the drawings, are not drawn according to scale.

## Claims

1. A method of providing a media product (71) to a terminal (2, 10, 502, 510) in a communication network (4, 504, 5) further comprising a streaming host (6) for streaming (201) media content (61) to said terminal (2, 502), which method comprises the steps of:
receiving (203), from said terminal (2, 502), unique customer data (221) comprising information specific for said terminal (2), a user of said terminal (2, 502), and/or an additional mobile terminal (510) associated with said user;
identifying (204) said terminal (2), user, and/or additional mobile terminal (510) associated with said user based on said unique customer data (221);
acquiring (202), from said terminal (2, 502), a streaming host identity (62) specific for the streaming host (6) currently streaming (201) media content (61) to said terminal (2, 502);
acquiring (205), from said streaming host (6), based on said streaming host identity (62), a content identity (611) of said media content (61) currently streamed (201) to said terminal (2, 502) from said streaming host (6);
associating (206) said content identity (611) with a predefined product identity (711) of a media product (71);
transmitting (207), to said terminal (2, 502), following said associating step (206), media information (31) indicative of the media product (71) of said product identity (711);
receiving (210), from said terminal (2, 502), a download request (222) for said media product (71) based on said media information (31); and
allowing (216) transmission of said media product (71) from a content host (7) holding said media product (71) to said terminal (2, 502, 510) and/or additional terminal(s) (10) designated by said user.

2. The method according to claim 1, further comprising the steps of:
checking (2041) if said customer data (221) comprises a unique customer identity (2211) identifying said terminal (2), user of said terminal, and/or additional mobile terminal (510) associated with said user; and if said customer data (221) does not comprise a unique customer identity (2211):
prompting (2042) said terminal (2, 510) to transmit identity lookup data (223) based on said customer data (221) to an identity lookup service (8) holding listings of registered unique identities (21) for terminals (2, 510) and/or subscribers;
acquiring (2044), from said identity lookup service (8), a unique identity (21) identified based on said identity lookup data (223) to match said terminal (2), user, and/or additional mobile terminal (510) associated with said user; and
deriving (2045) said customer identity (2211) from said unique identity (21).

3. The method according to any one of the preceding claims, wherein said step of associating (206) said content identity (611) with a predefined product identity (711) of a media product (71) comprises the steps of:
searching (2061) for an equivalent content identity corresponding to said content identity (611) in a first product identities lookup table (351) comprising stored predefined product identities (711), which product identities (711) each are linked to a corresponding content identity (611); and if said equivalent content identity is found:
matching (2062) said content identity (611) with the predefined product identity (711) linked to said equivalent content identity and hence with the media product (71) of said product identity (711);
and if said equivalent content identity not is found:
searching (2064) for a matching product identity corresponding to said content identity (611) in a second product identities lookup table (341) comprising stored predefined product identities (711), by comparing the text string (6111) of said content identity (611) with text strings (7111) of the respective product identities (711) in said second table (341); and
matching (2065) said content identity (611) with said matching product identity (711) and hence with the media product (71) of said product identity (711).

4. The method according to any one of the preceding claims, further comprising the steps of:
acquiring (211), following said download request (210), predefined terms (34) for said media product (71) based on said customer data (221);
transmitting (212) a download answer (32) based on said predefined terms (34) to said terminal (2, 502, 510); and
if said predefined terms (34) indicate that payment is required:
transmitting (217) a billing request (33) to a content host (7) providing said media product (71) to said terminal (2, 502, 10, 510), and/or an associated billing host (9).

5. The method according to claim 4, wherein said step of acquiring (211) predefined terms (34) for said media product (71) comprises the step of:
deriving, following said download request (222), said predefined terms (34) for said media product (71) based on said customer data (221) and further based on a price model algorithm (342) for differentiated pricing taking into account:
- a network operator (8) to which said terminal (2), user, and/or additional mobile terminal (510) associated with said user, is a subscriber, and/or
- said streaming host (6), and/or
- a history of previous downloads by said subscriber, and/or
- a time when said download request (222) was placed.

6. A method of downloading a media product to a terminal (2, 10, 502, 510) in a communication network (4, 504, 5) further comprising a streaming host (6) for streaming (201) media content (61) to said terminal (2, 502), which method is performed in said terminal (2, 502, 510) and comprises the steps of:
transmitting (202), to a media content download service-provider (3), a streaming host identity (62) specific for said streaming host (6) currently streaming (210) media content (61) that is available to said terminal;
transmitting (203), to said service-provider (3), unique customer data (221) comprising information specific for said terminal (2), a user of said terminal (2, 502), and/or an additional mobile terminal (510) associated with said user;
receiving (207), from said service-provider (3), media information (31) indicative of a predefined media product (71) of a product identity (711) associated with a content identity (611) of said streamed media content (61);
transmitting (210) a download request (222) for said media product (71) to said service-provider (3), as a response to a command (209) based on said media information (31); and
acquiring (218) said media product (71) from a content host (7) holding said media product (71) to said terminal (2, 502), and/or additional terminal(s) (10, 510) designated by said user.

7. The method according to claim 6, further comprising the step of:
transmitting (2043) identity lookup data (223) based on said customer data (221) to an identity lookup service (8) holding listings of registered unique identities (21) for terminals (2, 510) and/or subscribers.

8. The method according to claim 6 or 7, further comprising the steps of:
receiving (212), from said service-provider (3), as a response to said download request (222), a download answer (32) indicating predefined terms (34) for said media product (71), which terms (34) are based on said customer data (221); and
transmitting (215) an order request (224) to said service-provider (3) as a response to a further command (214) based on said download answer (32).

9. A service-provider (3) for providing a media product (71) to a terminal (2, 10, 502, 510) in a communication network (4, 504, 5) further comprising a streaming host (6) for streaming media content (201) to said terminal (2, 502), which service-provider (3) is adapted to perform the steps of the method according to any one of claims 1 to 6.

10. A terminal (2, 502, 510) in a communication network further comprising a streaming host (6) for streaming (201) media content (61) to said terminal (2, 502), which terminal (2, 502, 510) is adapted to perform the steps of the method according to claim 7 or 8.

11. A download system (1) for downloading a media product (71) to a terminal (2, 502, 10, 510) in a communication network (4, 504, 5) further comprising a streaming host (6) for streaming (201) media content (61) to said terminal (2, 502), which download system (1) comprises:
a service-provider (3) according to claim 9; and
a terminal (2, 502, 510) according to claim 10.

12. A computer program product comprising software instructions that, when executed in a service-provider (3) according to claim 9, performs the steps of the method according to any one of claims 1 to 6.

13. A computer program product comprising software instructions that, when executed in a terminal (2, 502, 510) according to claim 10, performs the steps of the method according to claim 7 or 8.
